# EUROPÄISCHE PATENTSCHRIFT

(11) **EP 4 504 611 B1**
(45) Veröffentlichungstag und Bekanntmachung des Hinweises auf die Patenterteilung: **01.04.2026**
(21) Anmeldenummer: 23717119.4
(22) Anmeldetag: 03.04.2023
(51) Int. Cl.: B65D 1/30

(54) **BEHÄLTERSYSTEM ZUM AUFBEWAHREN UND TRANSPORTIEREN VON LEBENSMITTELN**
CONTAINER SYSTEM FOR STORING AND TRANSPORTING FOODSTUFFS
SYSTÈME DE CONTENEURS POUR LA CONSERVATION ET LE TRANSPORT DE DENRÉES ALIMENTAIRES

(30) Priorität: 05.04.2022 CH 3812022
(43) Veröffentlichungstag der Anmeldung: 12.02.2025
(73) Patentinhaber: Alfabio S.r.l., 20019 Settimo Milanese (MI) (IT)
(72) Erfinder: ANDERLINI, Michelangelo, 20148 Milano (IT); BRASSIOLO, Maria Teresa, 20148 Milano (IT)
(74) Vertreter: Swisspat Riederer Hasler Patentanwälte AG
(86) Internationale Anmeldenummer: PCT/EP2023/058654
(87) Internationale Veröffentlichungsnummer: WO 2023/194294

(56) Entgegenhaltungen:
- FR-A1- 2 687 988
- IT-A1- 201900 001 087

## Beschreibung

### Gebiet der Erfindung

Die vorliegende Erfindung bezieht sich auf ein Behältersystem zum Aufbewahren und Transportieren von Lebensmitteln gemäss Anspruch 1.

### Stand der Technik

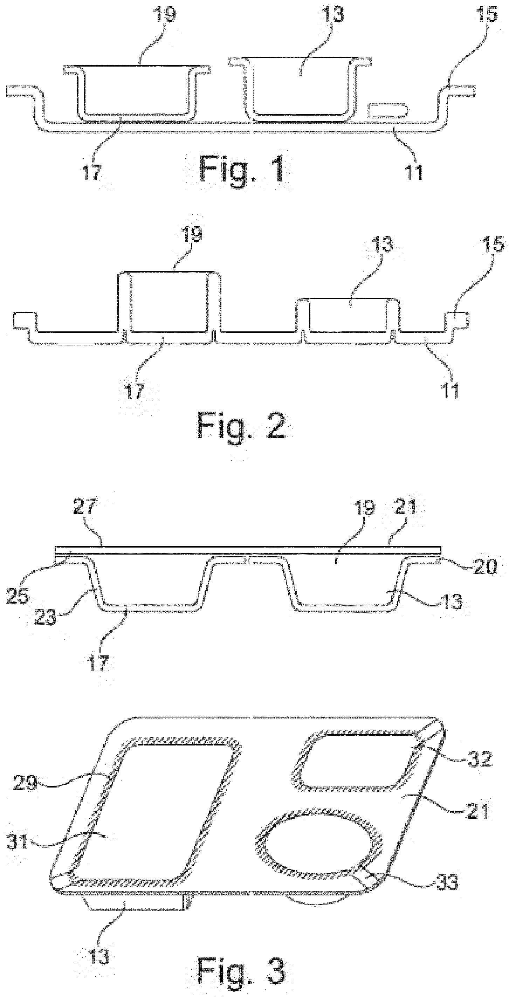

Mahlzeitentabletts werden häufig in der professionellen Catering-Branche verwendet, um Mahlzeiten in Krankenhäusern, Altenheimen und Schulen zu transportieren und zu servieren. Das traditionelle Tablettenkonzept besteht aus zwei Hauptkomponenten: dem Tablett selbst und dem Essen, das in geeigneten Behältern auf dem Tablett serviert wird. Das Tablett hat eine Trägerfunktion und muss daher ausreichend steif und solide sein, um das Gewicht der Mahlzeit und anderer Komponenten wie Besteck, Brot usw. zu tragen. Die oben auf dem Tablett platzierten Behälter haben die Funktion, Lebensmittel aufzunehmen und aufzubewahren; sie müssen oft oben versiegelt sein, um eine Kontamination der Lebensmittel zu verhindern und einen einwandfreien Zustand der abgefüllten Lebensmittel zu garantieren. Die beiden Komponenten, Tablett und Essensbehälter, sind unabhängig voneinander und nicht miteinander verbunden. Das heisst, dass das gesamte Gewicht der Mahlzeitenbehälter vom Tablett getragen werden muss (siehe Figur 1).

Eine Konsequenz davon ist, dass das Tragtablett eine beträchtliche Dicke aufweisen muss, um die erforderliche Steifigkeit zu erreichen. Üblicherweise haben Tragtablette in der Regel eine Dicke zwischen 3 und 6 mm. Die Tragtabletts bestehen in der Regel aus haltbaren Materialien wie Harzen, laminiertem Holz oder haltbaren Kunststoffen. Sie müssen nach jedem Gebrauch gewaschen und sterilisiert/ desinfiziert werden.

Die Lebensmittelbehälter können aus haltbaren (wiederverwendbaren) Materialien wie Keramik, Harzen oder haltbaren Kunststoffen hergestellt sein und müssen ebenfalls wie die Tragtabletts nach jedem Gebrauch gewaschen und sterilisiert/ desinfiziert werden. Sehr oft wurden in jüngerer Vergangenheit die wiederverwendbaren Lebensmittelbehälter durch Einweg-Essensbehälter ersetzt, die im Allgemeinen aus Kunststoff oder anderen Einwegmaterialien bestehen. Einweg-Essensbehälter haben den Vorteil, dass sie nicht nach jedem Service gewaschen und sterilisiert/desinfiziert werden müssen, sondern einfach zusammen mit den Speiseresten entsorgt werden können. Angesichts des geringeren Abwaschaufwands, den Einweg-Essensbehälter mit sich bringen, bemühen sich auch professionelle Caterer, Krankenhäuser, Kliniken und Schulspeisendienste darum, das Abwaschen der Trägerschalen zu vermeiden, um Wasser, Energie, Chemikalien und Zeit zu sparen.

Alternative Lösungen in diesem Bereich schlagen vor, die Tragtabletts direkt mit geeigneten Hohlräumen unterschiedlicher Größe und Tiefe in einem einzigen Stück zu formen (siehe Figur 2), um sowohl die Tragefunktion des Tabletts als auch die Aufbewahrungsfunktion der Lebensmittelbehälter zu vereinen.

Solche kombinierten Tragtabletts/Essensbehälter, nachfolgend auch als Mahlzeitentablett (MZT) bezeichnet, können aus thermoformbaren Kunststoffen oder aus Bagasse, Holzspänen usw. hergestellt sein. Der Hauptnachteil dieser Lösungen ist, dass sowohl die Tragfunktion (Steifigkeit) als auch Aufbewahrungsfunktion (Kontakt mit Lebensmitteln, Feuchtigkeits- und Fettbeständigkeit, Versiegelbarkeit) in die gesamte Menüschale integriert sein müssen. Dies erfordert einen insgesamt höheren Rohstoffverbrauch im Vergleich zur eingangs beschriebenen Lösung mit Trägerschalen und separaten Lebensmittelbehältern. Auch müssen qualitativ hochwertigere Materialien verwendet werden, da die ganze Oberfläche der Menüschale die geforderten Eigenschaften der Lebensmittelbehälter aufweisen muss. Ein Nachteil dieser Lösung ist, dass diese keine Flexibilität bei der Zubereitung der Speisen bietet, da die Position und Größe der geformten Hohlräume einmalig bei der Konstruktion der Form der Menüschale festgelegt werden.

Ein für den Einmalgebrauch bestimmtes Behältersystem zum Aufbewahren und Transportieren von Lebensmitteln gemäß dem Oberbegriff des Anspruchs 1 wird in der FR 2 687 988 A1 offenbart.

### Aufgabenstellung

Aufgabe der vorliegenden Erfindung ist es, ein für den Einmalgebrauch bestimmtes Behältersystem zum Aufbewahren und Transportieren von Lebensmitteln, insbesondere von ganzen Menüs, mit begrenzter Rohmaterialstärke vorzuschlagen, das leicht zu entsorgen ist und auch flexible Form- und Essenskombinationen ermöglicht. Insbesondere sollte das Behälterset hitze- und tiefkühlbeständig sein und insbesondere zur Aufbewahrung, zur Verpackung, zum Tiefkühlen, Aufwärmen und/oder zum Backen von Lebensmitteln in Mikrowellen- und konventionellen Öfen geeignet sein.

### Beschreibung

Die vorliegende Innovation betrifft ein für den Einmalgebrauch bestimmtes Behältersystem zum Aufbewahren und Transportieren von Lebensmitteln, insbesondere ein Mahlzeitentablett mit zwei oder mehr separaten Behältern gleicher oder unterschiedlicher Volumina vorzugsweise hergestellt aus einem kompostierbaren Material. Jeder Behälter umfasst einen Boden, Seitenwände, welche mit dem Boden verbunden sind, und gegenüberliegend dem Boden eine Öffnung, durch welche der Inhalt zugänglich ist.

Erfindungsgemäss ist das Behältersystem dadurch gekennzeichnet, dass die Behälter mit einem oberen Rand mit einem gemeinsamen Deckblatt fest verbunden sind, sodass in diesem Bereich eine mehrlagige Struktur gebildet ist. Dadurch ist ein stabiler Verbund zwischen den Behältern und der Deckplatte geschaffen. Im Vergleich zu den bekannten Servierlösungen unterscheidet sich das erfindungsgemäße Behältersystem darin, dass die Behälter unten an der Tragstruktur angeordnet und fest mit der aus einem Deckblatt gebildeten Tragstruktur verbunden sind, wodurch eine gefaltete Plattenstruktur entsteht, die für ihre mechanische Belastbarkeit im Bauwesen bekannt ist. Aufgrund der gefalteten Plattenstruktur ist die Gesamt-Steifigkeit des gesamten Behältersystems erhöht. Die Behälter sind vorzugsweise Lebensmittelbehälter und dienen zur Aufnahme von Lebensmitteln, wobei die Lebensmittel auch abgepackt sein können.

Nach dem Entfernen der Behälterdeckel bleibt bevorzugt ein Skelett des Deckblatts übrig, das mit den Behälterrändern verbunden bleibt. Die Behälterdeckel sind vorzugsweise Teilbereiche des Deckblatts. Nach der Trennung der Behälterdeckel vom Deckblatt bleiben die Bereiche, welche mit dem Rand der Behälter verbunden sind, weiterhin am Deckblatt und bilden einen inneren Rand der durch das Trennen des Behälterdeckels entstandenen Öffnung im Deckblatt. Ein mit solchen Öffnungen versehenes Deckblatt ist als ein Skelett des Deckblatts beschrieben. Das Skelett bildet die Tragstruktur, welche nach Lösen der Behälterdeckel vom Deckblatt vorliegt. Das Skelett des Deckblatts kann gewährleisten, dass die Behälter weiterhin mit dem Deckblatt verbunden sind. Das Deckblatt kann aufgeteilt werden in Behälterdeckel und ein Skelett, wobei die Behälterdeckel vom Deckblatt gelöst werden können und danach das Skelett übrigbleibt. Die Trennung zwischen den Behälterdeckeln und dem Skelett kann durch Schwächelinien erstellt sein, wobei die Schwächelinien das Lösen der Behälterdeckel vom Deckblatt bzw. vom Skelett des Deckblatts erleichtern.

Das Behältersystem ist in einer bevorzugten Ausführungsform ein Mahlzeitentablett. Das Mahlzeitentablett dient ausschliesslich zur Aufnahme, zum Aufbewahren und zum Transportieren von Mahlzeiten, insbesondere von ganzen Menüs. Des Weiteren kann das Behältersystem auch für das Servieren von Mahlzeiten verwendet werden.

Vorzugsweise weisen die Behälter jeweils einen abgeflachten, umlaufenden Rand einer bestimmten Breite auf. Ein abgeflachter, umlaufender Rand erzeugt eine Berührungsfläche mit dem Deckblatt. Durch den abgeflachten Teil des Randes weist dieser eine bestimmte Breite auf. Je breiter der abgeflachte Bereich des Randes umso grösser ist die Berührungsfläche zwischen dem Behälter und dem Deckblatt. Die Berührungsfläche sorgt für eine stärkere Verbindung zwischen dem Deckblatt und dem Behälter und erhöht den Effekt der gefalteten Plattenstruktur. Die Stärke der Verbindung nimmt mit wachsender Berührungsfläche zu. In einer bevorzugten Ausführung weist der Rand der Behälter eine Breite zwischen 1 und 8 mm, vorzugsweise zwischen 2 und 6 mm und besonders bevorzugt zwischen 2.5 und 5 mm auf. Auch wenn die Verbindungsstärke mit wachsender Berührungsfläche zunimmt, ist die Breite des Rands vorzugsweise begrenzt. Die Breite des Randes und somit die Berührungsfläche nehmen im Deckblatt einen Platz ein, welcher nicht für einen anderen Behälter verwendet werden kann. Somit steigt mit einer grösseren Berührungsfläche auch die Fläche auf dem Deckblatt, welche durch einen Behälter eingenommen wird. Um einen möglichst grossen Freiraum bei der Gestaltung der Behälterverteilung im Deckblatt bieten zu können, ist die Breite des Randes der Behälter vorzugsweise begrenzt.

Vorzugsweise ist von einer Kante des Deckblatts ein Rand eines Behälters maximal 25 mm entfernt. Die Distanz wird senkrecht zur Kante des Deckblatts gemessen. Ein kleiner Abstand zwischen der Kante des Deckblatts und eines Behälterrandes führt zu einer möglichst kleinen Fläche des Deckblatts und zugleich zu einer Materialersparnis. Ein weiterer Vorteil ist, dass der kleine Abstand zu einer erhöhten Stabilität der Kanten des Deckblatts führt. Damit kann ein Benutzer das Deckblatt ohne Weiteres an den Kanten umgreifen und anheben. Die Distanz zwischen der Kante des Deckblatts und dem Rand eines Behälters ermöglicht eine derart konstante Temperatur an der Kante des Deckblatts, dass für das Transportieren von warmen oder kalten Speisen in einem Behälter die Kante des Deckblatts jederzeit von einer Person umgriffen werden kann.

In einer bevorzugten Ausführungsform sind die Behälter und das Deckblatt heissiegelfähig. Damit kann die feste Verbindung zwischen den Behältern und dem Deckblatt in vorhandenen Heißsiegelmaschinen, die normalerweise zum Verschließen von Lebensmittelschalen verwendet werden, durch Anbringen von Hitze und Druck hergestellt werden. Vorteilhafterweise dient das Deckblatt als Deckel für die Behälter. Der Deckel hat die Aufgabe, eine Trennung zwischen dem Inneren des Behälters und dem Aussenbereich bzw. der Umgebung zu bilden. Diese Aufgabe kann durch das Deckblatt erfüllt werden, wodurch das Deckblatt als Deckel der Behälter dienen würde. Damit müssen keine separaten Deckel für die Behälter vorgesehen werden, was zu einem gesamthaft reduzierten Materialaufwand führt. Vorzugsweise ist das Deckblatt steif, durchsichtig oder undurchsichtig, bedruckt oder unbedruckt und kann aus verschiedenen Materialien bestehen, die mit dem Material des Behälters kompatibel sind. Wenn das Deckblatt steif ist, weist es eine erhöhte Biegesteifigkeit auf, wodurch das Deckblatt auch mit gefüllten Behältern beinahe keine Biegung durchführt.

Mit einem durchsichtigen Deckblatt kann ein optischer Zugang in das Innere der Behälter zur Verfügung gestellt werden. Die optische Begutachtung der Lebensmittel in einem Behälter können vorgenommen werden, ohne dass der Behälter dafür geöffnet werden muss. Ein undurchsichtiges Deckblatt kann zum Schutz von Lebensmittel dienen, die bei Lichtkontakt eine Veränderung erfahren können und somit vor dem Licht geschützt werden müssen. Das Material der Behälter ist vorzugsweise kompatibel mit dem Material des Deckblatts. Zwei Materialien sind kompatibel, wenn sie zusammen eine stoffschlüssige Verbindung miteinander eingehen können. Die Verbindung zweier miteinander kompatiblen Materialien fordert einen kleineren Aufwand und führt zu einer stärkeren Verbindung.

Die Behälter werden in der Regel unterschiedliche Inhalte aufweisen. Deshalb kann gewünscht sein, die Behälter nicht gleichzeitig sondern nacheinander zu öffnen. Während ein Behälter geöffnet vorliegt, sind die anderen Behälter noch im geschlossenen Zustand. Vorzugsweise sind im Deckblatt heraustrennbare Behälterdeckel vorgesehen, welche die Kontur der jeweiligen Behälteröffnungen haben. Durch das Öffnen eines Behälterdeckels wird lediglich der Inhalt des jeweiligen Behälters offengelegt. Der Behälterdeckel eines Behälters ist flächendeckend mit der Öffnung dieses Behälters. Das heisst, dass die Fläche des Behälterdeckels deckungsgleich bzw. kongruent mit der Öffnungfläche des Behälters ist. Das Trennen eines Behälterdeckels vom Deckblatt hat zur Folge, dass der Behälter zwar offen vorliegt, aber über seinen Rand mit dem Deckblatt weiterhin verbunden ist. Somit kommt das Deckblatt seiner Rolle als Tragelement für die daran angeordneten Behälter nach Öffnen eines Behälterdeckels auch weiterhin nach. Nach Gebrauch liegt das Behältersystem mit dem restlichen Deckblatt und den daran angeordneten Behältern als zusammenhängendes Stück vor. Durch den dauerhaften Zusammenhalt der Behälter mittels des Deckblatts ist das Aufräumen des Behältersystems nach dessen Gebrauch vereinfacht, da die Behälter jeweils immer in der gleichen Anordnung zueinander vorliegen und deshalb ineinander stapelbar sind.

An den Behälterdeckeln sind vorteilhafterweise Aufreisslaschen vorgesehen. Diese erleichtern das Trennen der Behälterdeckel vom Deckblatt. Die Trennung der Behälterdeckel findet vorzugsweise durch eine Abziehbewegung statt. Dafür muss ein erster Unterbruch in der Verbindung zwischen dem Behälterdeckel und dem Deckblatt eingeführt werden. Von diesem Unterbruch aus lässt sich die Trennung einfacher vorantreiben, sodass schlussendlich der Behälterdeckel vollständig vom Deckblatt separiert ist. Der erste Unterbruch kann mit Hilfe einer Aufreisslasche erzeugt werden. Die Aufreisslasche bietet aufgrund ihrer einfachen Handhabung eine ideale Vorrichtung, um den Trennungsprozess des Behälterdeckels zu starten.

Vorzugsweise sind die Aufreißlaschen am Seitenrand des Deckblatts vorgesehen. Die Anordnung der Aufreisslaschen am Seitenrand des Deckblatts erleichtert die Zugänglichkeit der Aufreisslaschen, wodurch eine einfachere Handhabung des Behältersets gewährleistet ist. Die Behälterdeckel sind vorteilhafterweise durch Perforationen, Teil-Perforationen, Schnitte oder Halbschnitte gebildet. Die Perforationen, Teil-Perforationen, Schnitte oder Halbschnitte bilden den Umfang und zugleich die Kontur des Behälterdeckels. Sie helfen die Trennung des Behälterdeckels vom Deckblatt mit einem kleineren Aufwand vorzunehmen und sorgen dafür, dass die Trennung entlang der Kontur stattfindet. Somit bilden sie Schwächelinien im Deckblatt, die einen Behälterdeckel bilden.

Die Perforation und Teilperforation sind durch kleine Löcher entlang der Kontur des Behälterdeckels erzeugt. Bei durchgehenden Löchern ist die Rede von einer Perforation während nicht-durchgehende Löcher eine Teilperforation bilden. Die Schnitte verlaufen zwar entlang der Kontur des Deckblattes, müssen aber nicht durch eine gerade gebildet sein, sondern können auch einen gewinkelten Verlauf entlang der Kontur aufweisen. Die Halbschnitte sind durch zwei entlang der Kontur parallelen, nicht durgehenden Schnitte gegeben, die je auf der Unter- und Oberseite des Deckblatts angeordnet sind. Die beiden parallelen Halbschnitte sind an deren Enden durch einen der Ebene des Deckblatts parallelen Schlitz verbunden.

In einer weiter bevorzugten Ausführungsform weist das Deckblatt Öffnungen auf, die im Wesentlichen mit den Öffnungen der Behälter kongruent sind oder einen Teilbereich dieser Öffnungen abdecken. Das Deckblatt kann vorgesehen sein, Öffnungen für Behälter aufzuweisen, deren Inhalt nicht durch einen Deckel geschützt werden muss. Für solche Behälter wäre ein Behälterdeckel lediglich zusätzlicher Material- und Bearbeitungsaufwand. Die Öffnung des Deckblatts können mit einer abziehbaren Folie verschliessbar sein. Dies ermöglicht, bestimmte Behälter mit einer separaten Folie zu verschliessen. Somit kann die Folie unterschiedliche Eigenschaften gegenüber dem Deckblatt haben, welche für die Aufbewahrung des Behälter-Inhalts von Bedeutung sein können.

Vorzugsweise geschieht die Verbindung zwischen Folie und Deckblatt mittels Heissversiegelung. Dabei wird unter Anbringen einer bestimmten Temperatur und Druck eine Verbindung zwischen der Folie und Deckblatt erzeugt. Heissversiegelung ist in der Lebensmittelindustrie ein oft verwendetes Verfahren, um eine Folie anzubringen oder eine dichte Verbindung zu erstellen. Somit kann von handelsüblichen Maschinen Gebrauch gemacht werden, indem ein in der Lebensmittelindustrie weit verbreitetes Verfahren zum Erstellen der Verbindung zwischen der Folie und dem Deckblatt verwendet wird.

In einer weiter bevorzugten Ausführungsform sind die Behälter konisch oder zylindrisch ausgebildet. Bei einer zylindrischen oder konischen Form ist die Rotationsachse senkrecht zum Deckblatt angeordnet. Eine konische oder zylindrische Form weisen den Vorteil auf, dass sie mit einer vergleichsweise geringen Wandfläche ein grosses Volumen besitzen.

Vorzugsweise weisen die Behälter jeweils die gleiche Höhe auf und die Öffnungen sind gleich gross oder grösser als die Bodenfläche. Die gleiche Höhe der Behälter ermöglicht es, dass beim Aufliegen des Behältersets auf einer Unterlage das Deckblatt horizontal ausgerichtet ist. Die gleich grossen oder grösseren Öffnungen gegenüber der Bodenfläche führen zu einer Behältergeometrie, welche einen einfachen und direkten Zugang zu allen Bereichen des Behälters von oben ermöglicht. Gleichzeitig ermöglicht diese Geometrie das Aufeinanderstapeln von Behältern, was sowohl bei der Herstellung als auch bei der Entsorgung zu einer Platzersparnis führt.

In einer weiter bevorzugten Ausführung sind die Behälter und das Deckblatt aus Materialien hergestellt, die biologisch abbaubar und kompostierbar sind. Damit kann das für den einmaligen Einsatz vorgesehene, erfindungsgemässe Behältersystem entsorgt werden, indem es zusammen mit Restspeisen kompostiert wird. Damit muss keine Trennung oder Sortierung zwischen Behälter und Restspeisen vorgenommen werden. Aufgrund der Verwendung von natürlich abbaubaren Materialien liegt keine Abfallproduktion vor und die Herstellung und der Einsatz des erfindungsgemässen Behältersets weist damit eine reduzierte Belastung der Umwelt auf. Die Kompostierbarkeit der eingesetzten Materialien kann mit einem entsprechenden Zertifikat belegt werden.

Vorzugsweise ist der Boden und die Seitenwände der Behälter aus einem Laminat mit jeweils einer Trägerschicht aus Karton, hergestellt aus mechanisch zerkleinerter Pulpe, einem ein- oder mehrlagigen Papier, Zellstoff oder Sekundärfasern aus nachwachsenden und/oder vorzugsweise biologisch abbaubaren Rohstoffen, und wenigstens eine Barriereschicht aus einem, fett-, wasser- und hitzebeständigen Material auf der dem aufzubewahrenden Lebensmittel zugewandten Seite hergestellt ist. Die Verwendung von Karton oder Papier bildet eine kostengünstige Option. Damit die Behälter den Anforderungen bezüglich der Hygiene und Beständigkeit genügen, ist eine Barriereschicht vorgesehen. Der Karton oder das Papier bildet mit der Barriereschicht ein Laminat, das aufgrund der Barriereschicht die Anforderungen an die Innenseite des Behälters erfüllt.

Vorzugsweise ist das Deckblatt aus Karton, hergestellt aus mechanisch zerkleinerter Pulpe, einem ein- oder mehrlagigen Papier, Zellstoff oder Sekundärfasern aus nachwachsenden und/oder vorzugsweise biologisch abbaubaren Rohstoffen. Vorteilhafterweise umfasst das Deckblatt wenigstens eine Barriereschicht aus einem, fett-, wasser- und hitzebeständigen Material an der Unterseite des Deckblatts. Die Barriereschicht kann in einer bevorzugten Ausführungsform heisssiegelfähig sein, sodass die Verbindung zwischen dem Deckblatt und einem Behälter mittels der Barrierreschicht erzeugt wird.

Der Behälter ist bevorzugt aus Karton oder Papier hergestellt und weist eine oder mehrere Barriereschichten auf. Die Herstellung des Behälters aus Karton oder Papier ist eine kostengünstige Option und weist eine tiefe Umweltbelastung auf. Eine oder mehrere Barriereschichten können dem Behälter spezifische Eigenschaften hinzufügen, welche in Karton oder Papier nicht vorhanden sind. Dies kann zum Beispiel die Beständigkeit gegenüber Fett, Wasser oder Hitze sein. Bei der Verwendung von mehreren Barriereschichten kann jede Barriereschicht je eine spezifische Eigenschaft aufweisen. Unter anderem kann die Barriereschicht auch vorgesehen sein, die Verbindung zwischen dem Deckblatt und den Behältern zu erstellen. Hierfür kann die Barriereschicht ein Klebemittel enthalten oder das Heisssiegeln ermöglichen.

Der Behälter und/oder das Deckblatt sind vorteilhafterweise innen mit einer Emulsion auf Wasserbasis beschichtet, die eine Fett- und Feuchtigkeitsbeständigkeit und Heißsiegeleigenschaften verleiht. Das Beschichten der Innenseite der Behälter und/oder des Deckblatts mit einer Emulsion auf Wasserbasis ist ein umweltfreundliches und kostengünstiges Verfahren zur Erzielung einer Fett- und Feuchtigkeitsbeständigkeit. Vorzugsweise umfasst die Barriereschicht eine Cellulosehydrat-Folie. Die Cellulosehydrat-Folie weist ideale Eigenschaft auf, um in Kontakt mit Lebensmitteln verwendet zu werden. Es zeigt eine hohe Beständigkeit gegenüber Wasser, Fett und Hitze und weist eine hohe Verträglichkeit mit Lebensmitteln auf, sodass die mit der Cellulosehydrat-Folie in Berührung stehenden Lebensmittel keine negative Wirkung erfahren.

Das Deckblatt als auch die Behälter sind vorzugsweise hitze- und kältebeständig. Das Behälterset ist vorgesehen unter unterschiedlichen Temperaturbedingungen verwendet zu werden. Dabei sollten das Deckblatt und die Behälter Ihre Aufgabe stets erfüllen, was deren Beständigkeit gegen Hitze und Kälte erfordert. Vorstellbar ist auch, dass einige Behälter und der jeweilige Bereich des Deckblatts einer Hitze unterliegen, während die restlichen Behälter und der restliche Bereich des Deckblatts unter dem Einfluss einer kalten Umgebung stehen. Der Behälter ist bevorzugt bei Temperaturen zwischen -80 °C und 215 °C, vorzugsweise bis 175 °C, und besonders bevorzugt bis 145 °C einsetzbar. Der Behälter umfasst ein derart hitze- und kältebeständiges Material, dass er bei Temperaturen von -80 °C bis 215 °C eingesetzt werden kann. Dieser Temperaturbereich deckt den für Lebensmittel relevanten Bereich ab. Somit können jegliche Lebensmittel in den Behältern aufgenommen und aufbewahrt werden. Zugleich unterstreicht diese Eigenschaft die Fähigkeit des erfindungsgemässen Behältersets, zur gleichen Zeit sowohl kalte als auch heisse Lebensmittel in den Behältern aufnehmen zu können.

Die Feste Verbindung zwischen dem Deckel und den Behältern kann mittels eines Klebstoffs erzeugt sein. Der Klebstoff ist vorzugsweise für den Kontakt mit Lebensmitteln geeignet und bei niedrigen und hohen Temperaturen beständig. Das Erzielen einer festen Verbindung mittels eines Klebstoffs kann ein einfaches und kostengünstiges Herstellverfahren bilden. Der Klebstoff kann beim Gebrauch des Behältersets mit Lebensmittel auf unbeabsichtigte Weise in Kontakt kommen. Deshalb ist es für die Gewährleistung der Sicherheit beim Gebrauch des Behältersets von grosser Wichtigkeit, dass der Klebstoff für den Kontakt mit Lebensmitteln geeignet ist und keine Gefahr für die Lebensmittel bildet. Zusätzlich muss die Verbindung zwischen dem Deckblatt und dem Behälter tiefen als auch hohen Temperaturen standhalten. Aus diesem Grund ist der Klebstoff bevorzugt ebenfalls hitze- und kältebeständig.

In einer weiter bevorzugten Ausführungsform sind die Behälter bedruckt. Dies kann unter anderem zur Kennzeichnung der Behälter dienen. Informationen zum Inhalt im Behälter können an der Aussenseite des Behälters angegeben werden. Dies kann für den Benutzer bei der Aufbewahrung oder bei der Verwendung der Behälter nützlich sein.

Das Deckblatt weist vorzugsweise eine Dicke von mindestens 0.3 mm, bevorzugt von mindestens 0.4 mm noch bevorzugter von mindestens 0.5 mm auf. Das Deckblatt bildet die tragende Struktur im erfindungsgemässen Behältersystem. Deshalb kann eine gewisse Dicke des Deckblatts bevorzugt werden, da damit zugleich die Festigkeit des Deckblatts erhöht wird. Somit kann durch Erhöhung der Dicke des Deckblatts die Steifigkeit

Vorteilhafter weist das Deckblatt ein Taber-Biegemoment für 15° von mindestens 7 mNm, vorzugweise mindestens 35 mNm, in Maschinenrichtung und mindestens 2.5 mNm, vorzugsweise mindestens 14 mNm, in Querrichtung auf. Das Taber-Biegemoment für 15° ist ein im Fachkreis bekannter Richtwert zur Bestimmung der Biegesteifigkeit von Papier und Karton. Dabei wird das Biegemoment gemessen, welches zur Durchbiegung um 15° eines Probestreifens erforderlich ist. Der Winkel zwischen der Biegelinie und der ursprünglichen Ausrichtung des Probestreifens wächst mit steigendem, am Probestreifen angelegten Biegemoment. Bei einer Durchbiegung von 15° ist das Taber-Biegemoment erreicht. Dieses kann experimentell bestimmt werden und ist in der Literatur für diverse Produkte aus der Papier- und Karton-Industrie bekannt. Die zwei unterschiedlichen Werte in Maschinenrichtung und in Querrichtung werden angegeben, weil bekannterweise Papier und Karton ein anisotropes Verhalten aufzeigen.

Das Deckblatt und der Behälterrand weisen zusammen vorzugsweise eine Dicke von mindestens 0.6 mm auf. Diese Dicke des Deckblatts mit dem Behälterrand ermöglicht eine Steifigkeit entlang des Behälterrandes zu erreichen, so dass nebst der Plattenstruktur des Behälters mit dem Deckblatt auch die Dicke einer Biegung des Deckblatts mit dem Behälter entgegenwirkt. Somit wird eine steife und stabile Struktur erreicht.

Vorteilhafterweise weist der Behälter eine konstante Wandstärke auf. Eine konstante Wandstärke des Behälters erleichtert die Produktion des Behälters und kann das Abschätzen des materiellen Aufwands zur Herstellung der Behälter stark vereinfachen. Unter anderem kann eine konstante Wandstärke erreicht werden, wenn lediglich ein Material zur Herstellung der Behälter verwendet wird und somit die Behälter aus einem Material bestehen.

Weitere Vorteile und Merkmale der Erfindung ergeben sich aus der nachfolgenden Beschreibung von Ausführungsbeispielen der Erfindung unter Bezugnahme auf schematische Darstellungen. Es zeigen in nicht massstabsgetreuer Darstellung:.
- Figur 1:: ein Tablett mit darauf platzierten Behältern ;
- Figur 2:: ein Tablett mit integrierten Behältern nach Stand der Technik;
- Figur 3:: ein Behältersystem aus einem Deckblatt und Behältern;
- Figur 4:: ein Behältersystem mit einem Deckblatt und unterschiedlichen Behältern;
- Figur 5:: ein Behältersystem mit separaten Öffnungen der Behälter;
- Figur 6:: ein Trolley mit einem darin platzierten Behältersystem;
- Figur 7:: zwei Behältersysteme mit Öffnungen im Deckblatt, aus welchen ein Gegenstand ragt.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph kann zur Unterscheidung gleichartiger bzw. funktionsgleicher oder funktionsähnlicher Elemente in einer weiteren Ausführung dienen.

Figur 1 zeigt ein Tablett 11 mit separaten Behältern 13, welche auf dem Tablett 11 platziert sind. Das Tablett 11 erleichtert den Transport der Behälter 13, da nicht alle einzeln bewegt werden müssen, sondern nach dem Platzieren auf dem Tablett 11, die Behälter 13 zusammen mit dem Tablett 11 transportiert werden. Die Behälter 13 können auf dem Tablett 11 an beliebigen Stellen platziert sein und ihre Position durch Gleiten auf dem Tablett 11 auch ändern. Damit die Behälter 13 nicht das Tablett 11 durch Gleiten verlassen können, ist ein nach oben ragender Rand an den Kanten 15 des Tabletts 11 angeordnet.

Das Tablett 11 ist vorgesehen an seinen Kanten 15 von einer Person umgriffen und getragen zu werden. Vorzugsweise wird das Tablett 11 an zwei gegenüberliegenden Kanten 15 gehalten oder fixiert. Das Tablett 11 nimmt die Gewichtskraft der auf ihm platzierten Behälter 13 auf. Die Steifigkeit des Tabletts 11 muss derart hoch gewählt sein, dass beim Transportieren eines beladenen Tabletts 11 dieses keine bemerkenswerte Biegung erfährt.

In Figur 2 ist ein Tablett 11 gezeigt, welches integrierte Behälter 13 aufweist. Die Behälter 13 sind mit dem Tablett 11 gleichzeitig hergestellt. Die Behälter 13 umfassen das gleiche Material wie das Tablett 11. Teilbereiche der Behälter 13 haben eine Doppelfunktion und bilden zugleich einen Bereich eines Behälters 13 und des Tabletts 11. Zum Beispiel kann der Boden 17 eines Behälters 13 gleichzeitig auch einen Bereich des Tablets 11 bilden. Ein solches Tablett 11 kann zum Beispiel durch ein Spritzgiessverfahren hergestellt sein. Eine in den Figuren nicht gezeigte alternative Ausführung dazu ist, wenn die Öffnung 19 des Behälters durch eine Öffnung im Tablett 11 gebildet ist und der Behälter 13 über den Rand 20 der Öffnung 19 mit dem Tablett 11 verbunden ist. Eine solche Ausführung kann durch Formpressen hergestellt sein und weist eine konstante Wanddicke über das Tablett 11 und den Behältern 13 auf. Die Behälter 13 sind durch das Formpressen aus dem Tablett 11 erzeugt und umfassen somit das gleiche Material wie das Tablett 11.

In Figur 3 ist ein erfindungsgemässes Behältersystem gezeigt, bei welchem die Behälter mittels eines Deckblatts 21 miteinander verbunden sind. Die Behälter 13 weisen einen Boden 17, mit dem Boden verbundene Seitenwände 23 und eine dem Boden 17 gegenüber angeordnete Öffnung 19 auf. Das Deckblatt 21 ist in der Gestalt einer Platte gebildet, sodass es sich in den zwei zu seiner Dicke senkrecht stehenden Richtungen ausdehnt. Die Dicke des Deckblatts ist durch die Distanz zwischen der Unterseite 25 und der Oberseite 27 des Deckblatts 21 definiert. Die Behälter 13 sind an der Unterseite 25 des Deckblatts 21 angeordnet. Die Verbindung mit dem Deckblatt 21 ist über den Rand 20 der Öffnung 19 eines Behälters 13 erzeugt. Der Rand 20 der Behälter 13 ist derart geformt, dass er in gleicher Richtung wie der Boden 17 des Behälters 13 gerichtet ist. Somit ist der Rand 20 parallel zum Boden 17 des Behälters 13 angeordnet und bildet eine Fläche, auf welcher das Deckblatt aufliegen kann. Die Berührungsfläche 29 zwischen dem Deckblatt 21 und einem Behälter 13 ist durch den Rand 20 des Behälters 13 gebildet. Die Behälter 13 können an beliebiger Stelle, in beliebiger Grösse und in beliebiger Formation an der Unterseite 25 des Deckblatts 21 angeordnet sein. Eine mögliche Anordnung der Behälter 13 am Deckblatt 21 ist in Figur 3 gezeigt. Zu sehen ist, dass die Behälter 13 unterschiedliche Grössen und Formen haben, aber über deren Rand 20 mit dem Deckblatt 21 verbunden sind. Der Rand 20, welcher die Berührungsfläche 29 mit dem Deckblatt 21 bildet, ist als schraffierte Fläche gezeigt. Durch das Verbinden des Deckblatts 21 mit einem Behälter 13 über dessen oberen Rand 20 kommt an der Berührungsfläche 29 eine mehrlagige Struktur zustande. Die mehrlagige Struktur verleiht der Verbindung eine hohe Festigkeit, so dass sie einer beliebig gerichteten Kraft sehr gut Stand halten kann. Das Lösen dieser Verbindung erfordert das Anbringen einer gezielt gerichteten Kraft.

Das Deckblatt 21 weist Bereiche 31 auf, welche oberhalb eines Behälters 13 zu liegen kommen. Diese Bereiche 31 sind vorgesehen, vom Deckblatt gelöst zu werden. Sie können durch Perforationen, Teilperforationen, Schnitte oder Halbschnitte gebildet sein. Die Konturen 32 dieser Bereiche, welche einen Behälterdeckel 31 bilden, liegen bündig mit der Innenkante des oberen Rands 20 des Behälters. Nach Lösen und Entfernen eines Behälterdeckels 31 ist somit der Behälter 13 weiterhin über seinen Rand 20 mit dem Deckblatt 21 fest verbunden. Die Perforation und Teilperforation sind durch kleine Löcher entlang der Kontur 32 des Behälterdeckels 31 erzeugt. Bei durchgehenden Löchern ist die Rede von einer Perforation während nicht-durchgehende Löcher eine Teilperforation bilden. Die Schnitte verlaufen zwar entlang der Kontur des Behälterdeckels 31, müssen aber nicht durch eine gerade gebildet sein, sondern können auch einen gewinkelten Verlauf entlang der Kontur 32 aufweisen. Die Kontur 32 der Behälterdeckel 31 sind aufgrund der oben beschriebenen Ausführung durch Schwächelinien gebildet, welche beim Aufbringen einer bestimmten Kraft schnell nachgeben.

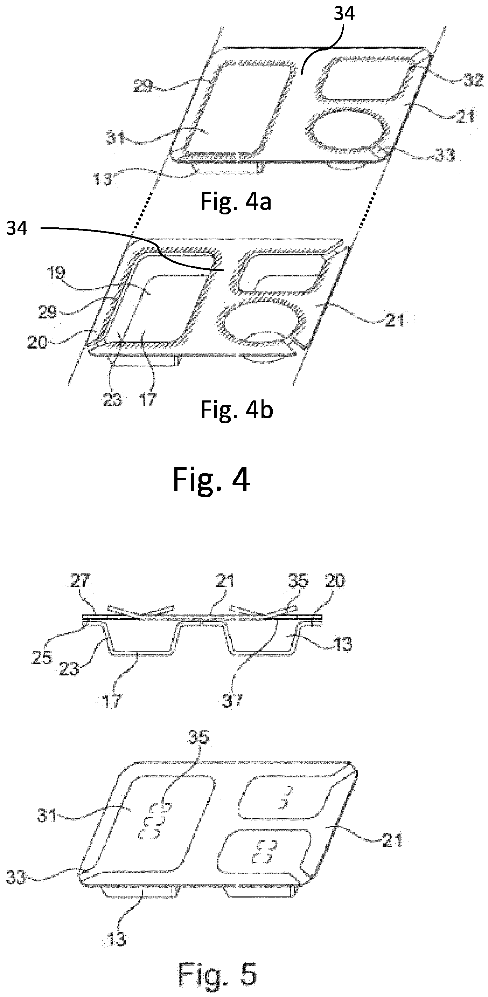

Figur 4 zeigt zwei unterschiedliche Zustände derselben Ausführung. In Figur 4a ist das Deckblatt 21 vollständig, während in Figur 4b die Behälterdeckel 31 vom Deckblatt 21 entfernt sind. Der Behälterdeckel 31 kann, wie in Figur 4a gezeigt, eine Aufreisslasche 33 an einer Ecke oder Kante aufweisen. Diese Aufreisslasche 33 geht über den Schattenwurf des oberen Randes 20 des Behälters hinweg. An jener Stelle ist zumindest nach Entfernen des Behälterdeckels 31 der obere Rand 20 des Behälters nicht mit dem Deckblatt 21 verbunden. Der Bereich des oberen Randes 20 des Behälters, über welchen die Aufreisslasche 33 angeordnet ist, liegt nach Entfernen der Aufreisslasche 33 frei, wie in Figur 4b ersichtlich. Denn die Aufreisslasche 33 ist ein Teil des Deckblatts 21. Die Aufreisslasche 33 kann an der Kante oder an der Ecke des Deckblatts 21 angeordnet sein. Dies erleichtert das Umgreifen der Aufreisslasche 33 durch eine Person. Die Aufreisslasche 33 kann durch Aufbringen einer verhältnismässig kleineren Kraft vom Deckblatt 21 gelöst werden. Die vom Deckblatt 21 gelöste Aufreisslasche 33 ermöglicht es, den Behälterdeckel 31 vom Behälterrand abzuziehen, indem lediglich die Schälkraft überwunden werden muss. Die zum Lösen des Behälterdeckels 31 erforderliche Schälkraft ist viel kleiner als die dafür notwendige Zugkraft.

In Figur 4 ist der Aufbau des Deckblatts 21 bestehend aus Behälterdeckeln 31 und einem Skelett 34 ersichtlich. Dabei bildet das Skelett jenen Bereich des Deckblatts 21, welcher nach Trennen der Behälterdeckel 31 vom Deckblatt 21 übrigbleibt. Die Form des Skeletts 34 ist durch die Anordnung der Behälter 13 bzw. der Behälterdeckel 31 bestimmt. In allen Ausführungen bildet das Skelett 34 ein einstückiges und zusammenhängendes Konstrukt. Die Behälter 13 sind über deren Rand am Deckblatt 21 und somit am Skelett 34 des Deckblatts angebracht, sodass die Behälter nach Entfernen der Behälterdeckel weiterhin mit dem Skelett 34 des Deckblatts einen gemeinsamen Verbund bilden, siehe dazu Figur 4b.

Figur 5 zeigt als Draufsicht und als perspektivische Ansicht eine Ausführungsform, in welcher das Deckblatt 21 weitere Laschen 35 aufweist. Diese Laschen 35 sind in Behälterdeckeln 31 angeordnet, also an jenen Stellen welche oberhalb eines Behälters 13 zu liegen kommen. Diese Laschen 35 können umgelenkt werden und bilden dann eine Lüftungsöffnung 37 im Behälterdeckel 31. Somit kann ein Stoffwechsel zwischen dem Innern eines Behälters 13 und dem Aussenbereich stattfinden. Dies ist zum Beispiel beim Erwärmen eines Behälters 13 von grosser Bedeutung, da die Dichte der erhitzten Luft im Behälter sich reduziert und die erhitzte Luft aufgrund der Expansion mehr Raum benötigt. Durch Ausweichen der erhitzten Luft durch die Lüftungsöffnungen 37 im Behälterdeckel 31 kann der Druck im Behälter 13 auf einem gewünschten Niveau gehalten werden. Da von dieser Funktion nicht stets Gebrauch gemacht werden muss, können die Lüftungsöffnungen 37 mit den bereits oben erwähnten Laschen 35 geöffnet und geschlossen werden. Bevorzugt lässt sich dieser Vorgang des Öffnens und Schliessens dieser Lüftungsöffnungen 37 beliebig oft wiederholen. Vorstellbar ist, dass diese Lüftungsöffnungen 37 auch für andere Zwecke verwendet werden.

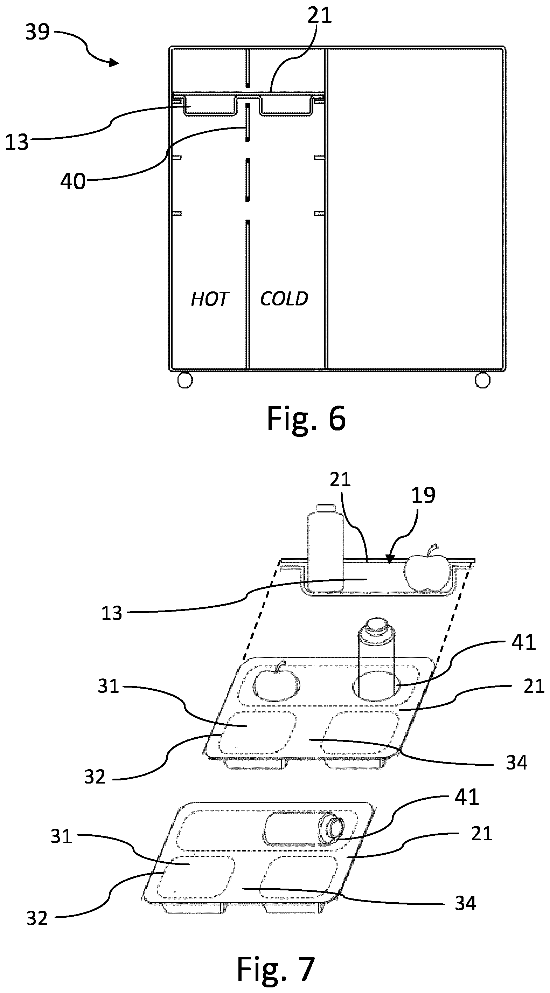

In Figur 6 ist ein Trolley 39 gezeigt, welcher zur Aufnahme von Tabletts oder erfindungsgemässen Behältersets dient. Beim erfindungsgemässen Behältersystem bildet das Deckblatt 21 die tragende Struktur. Wie bereits oben beschrieben, sind an der Unterseite des Deckblatts 21 die Behälter 13 angebracht. Im Trolley 39 ist das Deckblatt 21 auf zwei seitlichen Trägern platziert, auf welchen die Gewichtskraft des gesamten Behältersystem lastet. Das Deckblatt 21 muss eine derart hohe Steifigkeit aufweisen, dass es die Gewichtskraft der Behälter 13 aufnehmen und beim Auflagern an zwei gegenüberliegenden Seiten die horizontale Ausrichtung beibehalten kann. Im Trolley 39 können zusätzlich zwei Bereiche mit unterschiedlichen Temperaturen vorgesehen sein. Das Deckblatt 21 kommt in beiden Bereichen zu liegen, wobei ein oder mehrere Behälter im kühlen und die restlichen Behälter im warmen Bereich des Trolleys untergebracht sind. Das Deckblatt 21 muss die aufgrund des Temperaturunterschieds entstehenden thermischen Spannungen aufnehmen. Vorzugsweise hat das Material des Deckblatts 21 eine tiefe Wärmeleitfähigkeit, sodass über das Deckblatt 21 praktisch kein Wärmestrom stattfindet. Das Trolley verfügt über eine Zwischenwand 40, welche den warmen Bereich vom kalten Bereich trennt. Die Zwischenwand 40 weist Schlitze auf, welche etwa auf der Höhe der seitlichen Träger sind. Um ein Tablett im Trolley zu platzieren, muss das Tablet in den Schlitz in der Zwischenwand 40 eingeschoben werden. Zugleich kommt das Tablett auf den seitlichen Trägern zu liegen.

Die Ausführungsformen in Figur 7 zeigen jeweils ein Deckblatt 21, das bereits im Anfangszustand Öffnungen 41 oberhalb von bestimmten Behältern aufweist. Diese Öffnungen 41 sind oberhalb jener Behälter 13 angebracht, welche zur Aufnahme von Lebensmittel oder Gegenständen dienen, die wiederum keinen Schutz durch eine Deckelfläche benötigen. Zugleich ermöglicht diese Ausführung, Gegenstände und Lebensmittel in Behältern 13 des Behältersystems aufzunehmen, welche platziert im Behälter 13 das Deckblatt 21 nach oben überragen. Diese Öffnungen 41 können die ganze Behälteröffnung 19 abdecken oder lediglich einen Bereich des Behälterdeckels 31 bilden, welcher oberhalb des Behälters 13 angeordnet ist. Die Behälterdeckel 31 sind durch eine Kontur 32 um ihren Umfang markiert, welche zugleich die Trennlinie zwischen dem Behälterdeckel 31 und dem restlichen Deckblatt 21 bilden, wobei das restliche Deckblatt durch das Skelett 34 des Deckblatts zusammen mit den übrigen Behälterdeckeln 31 gebildet ist.

### Ausführungsbeispiel:

Die feste Verbindung des Deckblatts mit den Behältern kann durch Versiegeln oder Verkleben der Ränder einer Reihe von Behältern an der Unterseite mit einer einzigen oberen Platte, einem Träger, erreicht werden, die alle Komponenten zusammenhält und auch als Deckel für die Behälter dient. Sobald sie wie beschrieben miteinander verbunden sind, kombinieren das Deckblatt und die Behälter ihre strukturellen mechanischen Eigenschaften, um dem innovativen Mahlzeitentablett Steifigkeit zu verleihen, wobei die Dicke beider Komponenten begrenzt ist. Die mögliche Kombination verschiedener Formen und Größen von Behältern mit dem entsprechenden Deckblatt macht das Essenstablett flexibel in seiner Konfiguration. Jeder Behälter, der einmal fest mit dem Deckblatt verbunden ist, bildet eine unabhängige Einheit. Jeder Hohlraum kann für Lebensmittel oder andere Komponenten der Mahlzeit wie Besteck, Servietten usw. verwendet werden. Die begrenzte Dicke der einzelnen Komponenten macht die Struktur leicht, verbraucht weniger Rohstoffe, ist billiger und leichter zu entsorgen. Wenn die für die Behältern und das Deckblatt gewählten Materialien biologisch abbaubar und kompostierbar sind, kann die Struktur (innovatives Essenstablett) durch die Kombination beider Materialien als kompostierbar zertifiziert werden.

### BEZUGSZEICHENLISTE:

- 11: Tablett
- 13: Behälter
- 15: Kanten des Tabletts
- 17: Boden des Behälters
- 19: Öffnung des Behälters
- 20: Rand des Behälters
- 21: Deckblatt
- 23: Seitenwand des Behälters
- 25: Unterseite des Deckblatts
- 27: Oberseite des Deckblatts
- 29: Berührungsfläche zwischen Behälter und Deckblatt
- 31: Behälterdeckel
- 32: Kontur des Behälterdeckels
- 33: Aufreisslasche
- 34: Skelett des Deckblatts
- 35: Lasche der Lüftungsöffnung
- 37: Lüftungsöffnung
- 39: Trolley
- 40: Zwischenwand
- 41: Öffnungen im Deckblatt

## Patentansprüche

1. Für den Einmalgebrauch bestimmtes Behältersystem zum Aufbewahren und Transportieren von Lebensmitteln, insbesondere Mahlzeitentablett mit zwei oder mehr separaten Behältern (13) gleicher oder unterschiedlicher Volumina vorzugsweise hergestellt aus einem erneuerbaren und kompostierbaren Material, wobei jeder Behälter (13) jeweils
- einen Boden (17),
- Seitenwände (23), welche mit dem Boden (17) verbunden sind, und
- gegenüberliegend dem Boden (17) eine Öffnung (19) aufweist,
wobei ein gemeinsames Deckblatt (21) vorgesehen ist, das mit dem oberen Rand (20) der Behälter fest verbunden ist, sodass in diesem Bereich eine mehrlagige Struktur gebildet ist,
**dadurch gekennzeichnet,**
**dass** im Deckblatt (21) heraustrennbare Behälterdeckel (31) vorgesehen sind, welche die Kontur (32) der jeweiligen Behälteröffnungen (19) haben und
nach dem Entfernen der Behälterdeckel (31) ein Skelett (34) des Deckblatts übrigbleibt, das mit den Behälterrändern verbunden bleibt.

2. Behältersystem nach Anspruch 1, **dadurch gekennzeichnet, dass** die Behälter (13) jeweils einen abgeflachten, umlaufenden Rand (20) einer bestimmten Breite aufweisen.

3. Behältersystem nach Anspruch 1 oder 2, **dadurch gekennzeichnet, dass** an den Behälterdeckeln (31) Aufreisslaschen (33) vorgesehen sind, wobei die Aufreisslaschen (33) vorzugsweise am Seitenrand des Deckblatts (21) vorgesehen sind.

4. Behältersystem nach einem der Ansprüche 1 bis 3, **dadurch gekennzeichnet, dass** die Behälterdeckel (31) durch Perforationen, Teil-Perforationen, Schnitte oder Halbschnitte gebildet sind.

5. Behältersystem nach einem der Ansprüche 1 bis 4, **dadurch gekennzeichnet, dass** das Deckblatt Öffnungen (41) aufweist, die im Wesentlichen mit den Öffnungen (19) der Behälter kongruent sind, wobei die Öffnungen (41) des Deckblatts vorzugsweise mit einer abziehbaren Folie verschliessbar sind.

6. Behältersystem nach einem der Ansprüche 1 bis 5, **dadurch gekennzeichnet, dass** die Behälter (13) konisch oder zylindrisch ausgebildet sind vorzugsweise jeweils die gleiche Höhe aufweisen und die Öffnungen (19) vorzugsweise gleich gross oder grösser als die Bodenfläche sind.

7. Behältersystem nach einem der Ansprüche 1 bis 6, **dadurch gekennzeichnet, dass** der Boden (17) und die Seitenwände (23) der Behälter aus einem Laminat mit jeweils einer Trägerschicht aus Karton, hergestellt aus mechanisch zerkleinerter Pulpe, einem ein- oder mehrlagigen Papier, Zellstoff oder Sekundärfasern aus nachwachsenden und/oder vorzugsweise biologisch abbaubaren Rohstoffen, und wenigstens eine Barriereschicht aus einem, fett-, wasser- und hitzebeständigen Material auf der dem aufzubewahrenden Lebensmittel zugewandten Seit hergestellt ist.

8. Behältersystem nach einem der Ansprüche 1 bis 7, **dadurch gekennzeichnet, dass** der Behälter (13) und/oder das Deckblatt (21) innen mit einer Emulsion auf Wasserbasis beschichtet ist, die Fett- und Feuchtigkeitsbeständigkeit und Heißsiegeleigenschaften verleiht.

9. Behältersystem nach Anspruch 7 oder 8, **dadurch gekennzeichnet, dass** die Barriereschicht eine Cellulosehydrat-Folie umfasst.

10. Behältersystem nach einem der Ansprüche 1 bis 9, **dadurch gekennzeichnet, dass** der Behälter (13) bei Temperaturen zwischen -80 °C und 215° C, vorzugsweise bis 175 °C, und besonders bevorzugt bis 145 °C einsetzbar ist.

11. Behältersystem nach einem der Ansprüche 1 bis 10, **dadurch gekennzeichnet, dass** einer der Behälter (13) eine oder mehrere Zwischenwände aufweist und die Seitenwände (23) und der Boden (17) der Behälter vorzugsweise dünner sind als das Deckblatt (21).

12. Behältersystem nach einem der Ansprüche 1 bis 11, **dadurch gekennzeichnet, dass** der Boden (17) des Behälters Vertiefungen und/oder Erhebungen zur Stärkung der Struktur aufweist.

13. Behältersystem nach einem der Ansprüche 1 bis 12, **dadurch gekennzeichnet, dass** das Deckelblatt (21) und der Behälterrand (20) zusammen eine Dicke von mindestens 0.6 mm aufweisen.

14. Behältersystem nach einem der Ansprüche 1 bis 13, **dadurch gekennzeichnet, dass** der Behälter (13) eine konstante Wandstärke aufweist.

15. Behältersystem nach einem der Ansprüche 1 bis 14, **dadurch gekennzeichnet, dass** nach Gebrauch von mindestens zwei Behältersystemen diese aufeinander stapelbar sind.

## Claims

1. A single-use container system for storing and transporting food, in particular meal tray, having two or more separate containers (13) of the same or different volumes, preferably produced from a renewable and compostable material, wherein each container (13) respectively comprises
- a base (17),
- side walls (23) connected to the base (17), and
- an opening (19) opposite the base (17),
wherein a common covering sheet (21) is provided that is securely connected to the upper edge (20) of the containers such that a multi-layer structure is formed in this region,
**characterized in that**
the covering sheet (21) comprises removable container lids (31) that have the contour (32) of the respective container openings (19), and
**in that** a skeleton (34) of the covering sheet remains that stays connected to the container edges after the container lids (31) are removed.

2. The container system according to Claim 1, **characterized in that** the containers (13) each have a flattened, circumferential edge (20) of a certain width.

3. The container system according to claim 1 or 2, **characterized in that** pull-off tabs (33) are provided on the container lids (31), wherein the pull-off tabs (33) are provided preferably on the lateral edge of the covering sheet (21).

4. The container system according to any of Claims 1 to 3, **characterized in that** the container lids (31) are formed by perforations, partial perforations, incisions or half-incisions.

5. The container system according to any of Claims 1 to 4, **characterized in that** the covering sheet comprises openings (41) that are substantially congruent with the openings (19) of the containers, wherein the openings (41) of the covering sheet preferably can be sealed with a pull-off film.

6. The container system according to any of Claims 1 to 5, **characterized in that** the containers (13) are adapted to be conical or cylindrical, preferably have the same height and **in that** the openings (19) preferably are equal to or greater than the base surface.

7. The container system according to any of Claims 1 to 6, **characterized in that** the base (17) and the side walls (23) of the containers are produced from a laminate with a respective carrier layer made of cardboard produced from mechanically comminuted pulp, a single or multi-layer paper, cellulose or secondary fibers made of renewable and/or preferably biodegradable raw materials, and at least one barrier layer made of a grease-, water- and heat-resistant material on the side facing the foodstuffs to be stored.

8. The container system according to any of Claims 1 to 7, **characterized in that** the container (13) and/or the covering sheet (21) is coated on the inside with a water-based emulsion that provides grease and moisture resistance and hot sealing properties.

9. The container system according to Claim 7 or 8, **characterized in that** the barrier layer comprises a cellulose hydrate film.

10. The container system according to any of Claims 1 to 9, **characterized in that** the container (13) can be used at temperatures between -80°C and 215°C, preferably up to 175°C, and particularly preferably up to 145°C.

11. The container system according to any of Claims 1 to10, **characterized in that** one of the containers (13) comprises one or more intermediate walls, and the side walls (23) and the base (17) of the containers are preferably thinner than the covering sheet (21).

12. The container system according to any of Claims 1 to11, **characterized in that** the base (17) of the container comprises depressions and/or projections to strengthen the structure.

13. The container system according to any of Claims 1 to 12, **characterized in that** the covering sheet (21) and the container edge (20) together have a thickness of at least 0.6 mm.

14. The container system according to any of Claims 1 to 13, **characterized in that** the container (13) has a constant wall thickness.

15. The container system according to any of Claims 1 to 30, **characterized in that** the container systems can be stacked on top of one another after at least two container systems are used.

## Revendications

1. Système de récipients à usage unique pour le stockage et le transport de denrées alimentaires, en particulier plateau repas avec deux ou plusieurs récipients séparés (13) de volumes identiques ou différents, de préférence fabriqués à partir d'un matériau renouvelable et compostable, chaque récipient (13) présentant
- un fond (17),
- des parois latérales (23) reliées au fond (17), et
- une ouverture (19) en face du fond (17),
étant prévue une feuille de recouvrement commune (21) qui est fixement reliée au bord supérieur (20) des récipients, de sorte qu'une structure multicouche soit formée dans cette zone,
**caractérisé en ce que**
sont prévus dans la feuille de recouvrement (21) des couvercles de récipients (31) séparables, qui ont le contour (32) des ouvertures de récipient respectives (19) et que, après avoir retiré les couvercles de récipient (31), il reste un squelette (34) de la feuille de recouvrement, qui reste relié aux bords du récipient.

2. Système de récipients selon la revendication 1, **caractérisé en ce que** les récipients (13) présentent chacun un bord aplati et circonférentiel (20) d'une certaine largeur.

3. Système de récipients selon la revendication 1 ou 2, **caractérisé en ce que** les couvercles du récipient (31) comportent des pattes déchirables (33), les pattes déchirables (33) étant prévues de préférence sur le bord latéral de la feuille de recouvrement (21).

4. Système de récipients selon l'une des revendications 1 à 3, **caractérisé en ce que** les couvercles de récipients (31) sont formés par perforations, perforations partielles, coupes ou demi-coupes.

5. Système de récipients selon l'une des revendications 1 à 4, **caractérisé en ce que** la feuille de recouvrement présente des ouvertures (41) sensiblement congruentes avec les ouvertures (19) des récipients, les ouvertures (41) de la feuille de recouvrement pouvant être fermées de préférence par un film amovible.

6. Système de récipients selon l'une des revendications 1 à 5, **caractérisé en ce que** les récipients (13) sont coniques ou cylindriques et présentent de préférence de la même hauteur et que les ouvertures (19) sont de préférence égales ou supérieures à la surface du sol.

7. Système de récipients selon l'une des revendications 1 à 6, **caractérisé en ce que** le fond (17) et les parois latérales (23) des récipients sont constitués d'un stratifié contenant chaque fois une couche de support en carton, fabriqué à partir de pulpe broyée mécaniquement, d'un papier à une ou plusieurs couches, de pâte cellulosique ou de fibres secondaires provenant de matières premières renouvelables et/ou de préférence biodégradables, et qu'au moins une couche formant barrière est fabriquée à partir d'un matériau résistant à la graisse, à l'eau et à la chaleur sur la face tournée vers la denrée alimentaire à conserver.

8. Système de récipients selon l'une des revendications 1 à 7, **caractérisé en ce que** le récipient (13) et/ou la feuille de recouvrement (21) est revêtu à l'intérieur d'une émulsion à base d'eau qui confère une résistance à la graisse et à l'humidité et des propriétés d'étanchéité à la chaleur.

9. Système de récipients selon la revendication 7 ou 8, **caractérisé en ce que** la couche formant barrière comprend un film de cellulose hydratée.

10. Système de récipients selon l'une des revendications 1 à 9, **caractérisé en ce que** le récipient (13) °peut être utilisé à des températures comprises entre -80 °C et 215 °C, de préférence jusqu'à 175 °C, et très préférentiellement jusqu'à 145 °C.

11. Système de récipients selon l'une des revendications 1 à 10, **caractérisé en ce que** l'un des récipients (13) comporte une ou plusieurs parois intermédiaires et que les parois latérales (23) et le fond (17) des récipients sont de préférence plus minces que la feuille de recouvrement (21).

12. Système de récipients selon l'une des revendications 1 à 11, **caractérisé en ce que** le fond (17) du récipient présente des creux et/ou des proéminences pour renforcer la structure.

13. Système de récipients selon l'une des revendications 1 à 12, **caractérisé en ce que** la feuille de recouvrement (21) et le bord du récipient (20) présentent ensemble une épaisseur d'au moins 0,6 mm.

14. Système de récipients selon l'une des revendications 1 à 13, **caractérisé en ce que** le récipient (13) a une épaisseur de paroi constante.

15. Système de récipients selon l'une des revendications 1 à 14, **caractérisé en ce que**, après utilisation d'au moins deux systèmes de récipients, ils peuvent être empilés les uns sur les autres.
